# EUROPEAN PATENT APPLICATION

(11) **EP 3 905 769 A1**
(43) Date of publication of application: **03.11.2021**
(21) Application number: 19903668.2
(22) Date of filing: 16.10.2019
(51) Int. Cl.: H04W 28/04, H04M 1/00, H04W 4/44

(54) **COMMUNICATION TERMINAL DEVICE AND BASE STATION DEVICE**

(30) Priority: 25.12.2018 JP 2018241639
(71) Applicant: DENSO CORPORATION, Kariya-city, Aichi-pref., 448-8661 (JP)
(72) Inventor: ARAKI Teruaki, Kariya- city Aichi-pref. 448-8661 (JP)
(74) Representative: Winter, Brandl - Partnerschaft mbB
(86) International application number: PCT/JP2019/040610
(87) International publication number: WO 2020/137100

(57) **Abstract**

A communication terminal device (100) is mounted on a mobile body and communicates with a base station device by a low power wide area (LPWA) wireless communication method. The communication terminal device includes: a storage portion (101) that stores data to be transmitted; a communication portion (102) that transmits the data to the base station device and receives a response to transmission of the data from the base station device; a speed sensor (103) that detects a movement speed of the mobile body; and a retransmission controller (104) that controls retransmission of the data to the base station device. The retransmission controller holds the retransmission of the data based on the movement speed when the communication portion does not receive the response.

## Description

### CROSS REFERENCE TO RELATED APPLICATION

This application is based on Japanese Patent Application No. 2018-241639 filed on December 25, 2018, the description of which is incorporated herein by reference.

### TECHNICAL FIELD

The present disclosure relates to a mechanism of retransmission when, in mobile communication, particularly, LPWA (Low Power Wide Area) wireless communication between a communication terminal device and a base station device is interrupted during movement.

### BACKGROUND ART

In recent years, utilization form borders of conventional smartphones or mobile phones are transcended, all things are connected to a network, and exchange information. As the result, loT (Internet of Things) era has arrived, and generated a new additional value. Many of these things are located out of reach, and have characteristics that needs only a small amount of data for a long period. In response to this request, specifications of eMTC (enhanced Machine Type Communication) advocated by 3GPP (Third Generation Partnership Project), NB-IoT (Narrow Band Internet of Things) optimized for a smaller amount of data communication, SIGFOX (registered trademark) developed by Sigfox company, LoRa (registered trademark) developed by Semitech company, and the like are established.

On the other hand, in a mobile wireless communication system mounted on a moving vehicle, the communication is unstable when performing high-speed communication during high-speed movement. In consideration of this, a technology for switching the communication speed in accordance with the speed is proposed (Patent Literature 1).

### RELATED ART LITERATURE

### PATENT LITERATURE

Patent Literature 1: JP H11-98574 A

### SUMMARY OF THE INVENTION

As a result of detailed studies of the inventor of the present disclosure, it was found that such a communication terminal device for the loT has no mechanism for preventing communication interruption due to frequency doppler shift of carriers that occur during communication with the corresponding mobile body with LTE (Long Term Evolution), in order to provide a wide area communication and reduce an electric power consumption. Further, it was found that the communication terminal device is not always suitable for being mounted on the mobile body. The inventor of the present disclosure found that such a communication terminal device or the like can reliably perform the data communication by devising retransmission performed when the communication is interrupted.

It is an object of the present disclosure to appropriately perform retransmission by a communication terminal device and a base station device that are mounted on a mobile body and use a low power wide area (LPWA) wireless communication method.

According to one aspect of the present disclosure, a communication terminal device is mounted on a mobile body and communicates with a base station device by a low power wide area (LPWA) wireless communication method. The communication terminal device includes: a storage portion that stores data to be transmitted; a communication portion that transmits the data to the base station device and receives a response to transmission of the data from the base station device; a speed sensor that detects a movement speed of the mobile body; and a retransmission controller that controls retransmission of the data to the base station device. The retransmission controller holds the retransmission of the data based on the movement speed when the communication portion does not receive the response.

According to another aspect of the present disclosure, a base station device receives data from a communication terminal device that is mounted on a mobile body and communicates by a low power wide area (LPWA) wireless communication method. The communication terminal device includes a storage portion that stores data to be transmitted, a communication portion that transmits the data to the base station device and receives a response to transmission of the data from the base station device, a speed sensor that detects a movement speed of the mobile body, and a retransmission controller that controls retransmission of the data to the base station device and hold the retransmission of the data based on the movement speed when the communication portion does not receive the response. The data includes a sequence number assigned in an order of transmission from the communication portion or an order of acquisition from the communication terminal device. The base station device includes a communication portion that receives the data and transmits the response to reception of the data to the communication terminal device, an analysis portion that analyzes the data, and a storage portion that stores the data. When there is multiple data having a duplicate sequence number, the analysis portion leaves any one of data, discards a remaining of data, stores left data in the storage portion.

According to another aspect of the present disclosure, a communication method is a communication method of a communication terminal device that is mounted on a mobile body and communicates with a base station device by a low power wide area (LPWA) wireless communication method. The communication method stores data to be transmitted, transmits the data to the base station device, detects a movement speed of the mobile body, and holds retransmission of the data based on the movement speed when a response to transmission of the data is not received from the base station device.

According to another aspect of the present disclosure, a communication control program is a communication control program executed by a communication terminal device that is mounted on a mobile body and communicates with a base station device by a low power wide area (LPWA) wireless communication method. The communication control program stores data to be transmitted, transmits the data to the base station device, detects a movement speed of the mobile body, and holds retransmission of the data based on the movement speed when a response to transmission of the data is not received from the base station device.

### [Effects of Invention]

The communication terminal device, the base station device, the communication method, the communication control program does not perform the retransmission that may be wasted when the movement speed of the mobile body increases. Thereby, it may be possible to reduce the power consumption of the communication terminal device.

### BRIEF DESCRIPTION OF THE DRAWINGS

FIG. 1 is a block diagram illustrating communication of a communication terminal device according to a first embodiment;
FIG. 2 is a flowchart illustrating a flowchart of operation of the communication terminal device according to the first embodiment;
FIG. 3 is an explanatory diagram illustrating a format of data transmitted by the communication terminal device according to the first embodiment;
FIG. 4 is a block diagram illustrating a configuration of a base station device according to a second embodiment; and
FIG. 5 is a flowchart illustrating an operation of the base station device according to the second embodiment.

### DESCRIPTION OF EMBODIMENTS

Hereinafter, embodiments of the present disclosure will be described with reference to the drawings.

The present disclosure described below means the disclosure described in the claims, and is not limited to the following embodiments. Further, at least words within the double quotation mean words and phrases described in claims, and are not limited to the following embodiments.

Configurations and methods described in dependent claims of claims, configurations and methods of the following embodiments corresponding to the configurations and the methods described in the dependent claims, and the configurations and the methods described only in the following embodiments without descriptions in claims should be interpreted as arbitrary configurations and arbitrary methods in this disclosure. In a case where the scope of claims is broader than descriptions of the embodiments, configurations and methods described in the following embodiments are just examples of configurations and methods of the present disclosure, which should be interpreted as arbitrary configurations and arbitrary methods in this disclosure. In any cases, essential configurations and methods of this disclosure should be interpreted based on independent claims.

Any effects described in the embodiments are effects obtained by configurations of the embodiments as an example of this disclosure, and are not necessarily effects of this disclosure.

In the present disclosure, the configuration disclosed in each embodiment is not limited to each embodiment alone, but may be combined across the embodiments. For example, the configuration disclosed in one embodiment may be combined with another embodiment. Further, the disclosed configurations may be collected and combined in each of the plurality of embodiments.

Findings or difficulties described in this disclosure are not publicly known, but person including the inventor has independently found out, and is a fact that affirms the inventive step of the invention together with the configuration and method of the present disclosure.

### (First embodiment)

### 1. Configuration of communication terminal device

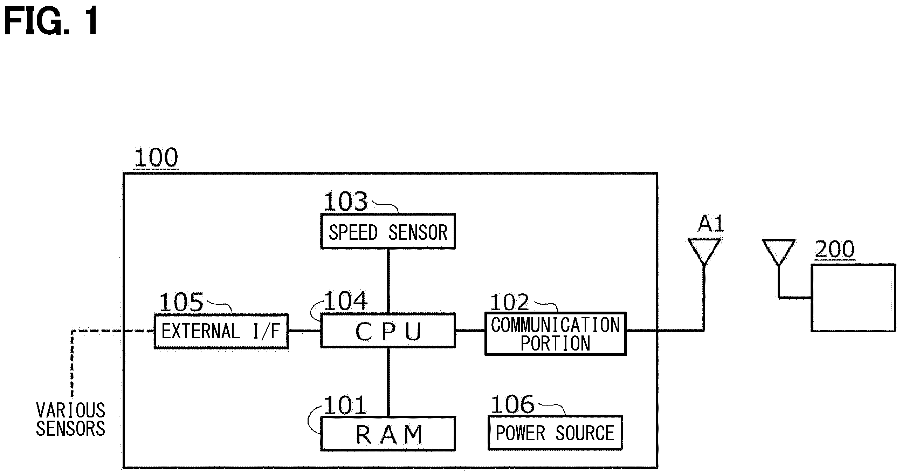

First, a communication terminal device 100 of a first embodiment will be described with reference to FIG. 1. In the following embodiments, an in-vehicle communication terminal device mainly mounted on an automobile will be described as an example. However, the present disclosure includes a communication terminal device other than the in-vehicle communication terminal device unless the claims are limited.

The communication terminal device 100 is mounted on a "mobile body" such as an automobile, and communicates with a base station device 200 described in a second embodiment by a "low power wide area (LPWA) wireless communication method". For example, the communication terminal device 100 performs communication using, for example, SIGFOX developed by the Sigfox company or LoRa developed by the Semtech company. These communication methods have a characteristic that starts communication based on an up communication from the communication terminal device to the base station device. The communication terminal device 100 includes a RAM 101, a communication portion 102, a speed sensor 103, a CPU 104, an external I/F 105, a power source 106, and an antenna A1. Here, the "mobile body" of the present disclosure is a movable body. and the movement speed is not limited. The mobile body may stop. For example, the mobile body includes automobiles, motorcycles, pedestrians, ships, and aircrafts, and is not limited to these. The "low power wide area (LPWA) wireless communication method" of the present disclosure is a general term for wide area wireless communication systems having low power consumption and a communication distance similar to that of a mobile phone, and the system is not limited.

The RAM 101 (corresponding to a "storage portion") stores data via the CPU 104. The data is acquired from various sensors connected to the external interface (I/F) 105, and is data to be transmitted. The various sensors may not be connected to the external I/F 105, and may be built in the communication terminal device 100. Examples of various sensors may include, in addition to thermometers, hygrometers, sunshine meters, GPS, and the like, a sensor that is mounted on an automobile and is connected to a driving type electronic control unit that controls an engine, a steering wheel, a brake, or the like, a vehicle body type electronic control unit that controls a meter, a power window, or the like, and a safety control type electronic control unit that performs control for preventing collision with an obstacle or a pedestrian. Although it is assumed that the RAM 101 is a random access memory, the RAM 101 may be a hard disk (HDD), a flash memory, or the like. In this case, when the power source is turned off, data is not deleted, and can be stored.

The communication portion 102 transmits data read via the CPU 104 from the antenna A1 to the base station device 200 The communication portion 102 receives a response, from the base station device 200, to the transmission of the data from the communication terminal device 100.

The speed sensor 103 detects a "movement speed" of the automobile mounted on the communication terminal device 100. The speed sensor is devices using, for example, a global positioning system (GPS) or an untethered dead reckoning (UDR). These devices do not need to be connected to the automobile, and therefore installation work by a specialized business operator is unnecessary. The communication terminal device 100 can be implemented as, for example, a device mounted on a dashboard. Of course, the speed sensor 103 may be a sensor connected to an axle of the automobile. Alternatively, an accelerometer may be used. The speed sensor 103 detects the movement speed periodically or based on a trigger input from the outside. In an example of the former, the speed sensor 103 detects the movement speed every 100 ms, for example. In an example of the latter, the trigger is a trigger when the communication portion 102 transmits the data, when the communication portion 102 determines that the retransmission of the data is performed or hold, or when it is determined that the reception portion 102 does not receive the response from the base station device 200. Here, "the movement speed" of the present disclosure includes not only the data indicating the speed but also data indirectly indicating a speed such as a movement distance in a certain time.

The power source 106 supplies the power source to each portion of the communication terminal device 100. The power source may be, for example, directly supplied from a cigarette socket, and a primary battery or a secondary battery may be used. By using the battery, the communication terminal device 100 can be mounted on the dashboard of the automobile without a cable or the like for power source supply, and installation work becomes easy.

The CPU 104 (corresponding to a "retransmission controller") controls the external I/F 105, the RAM 101, and the communication portion 102 as described above, and further controls the retransmission of data transmitted from the communication portion 102 to the base station device 200. The control content is, for example, hold of the retransmission, execution of the retransmission, and stop of the retransmission. Hereinafter, the content of the retransmission control by the retransmission controller will be described in detail.

### (1) Hold of retransmission

The CPU 104 "holds the retransmission" of the data based on the movement speed detected by the speed sensor 103 in a case where "the communication portion 102 does not receive the response" from the base station device 200. In a specific example, in a case where the speed sensor 103 detects the movement speed "equal to or higher than a predetermined speed", when the communication portion 102 transmits the data and does not receive the response from the base station device 200, the CPU 104 holds the retransmission of the data. For example, it is assumed that the SIGFOX is used as the low power wide area wireless communication method and the predetermined speed is set to 40 km/h. When the speed sensor 103 detects a speed of 60 km/h, the communication portion 102 transmits the data. When the response to the transmission of this data from the base station device 200 is not received within 45 seconds (that is, a sleep time of 20 seconds after the transmission and a reception waiting time of 25 seconds), the retransmission of the data is not performed.

Here, the "predetermined speed" of the present disclosure is not limited to a constant speed, may not be the constant speed, may be determined in accordance with, for example, the amount of rainfall or the like, and may be uniquely determined by calculation or the like.

The description "equal to or higher than" of the present disclosure includes a case where the reference numerical value is included and a case where the reference numerical value is not included.

The case where "the communication portion 102 does not receive the response" in the present disclosure is a case where the response is not received within a period in which the response can be expected, and it is unnecessary immediately after the data is transmitted.

The description of "holds the retransmission" of the present disclosure means that the retransmission is not performed until a present trigger occurs.

The movement speed increases, and thereby it may be possible to estimate interruption of the up communication from the communication terminal device 100 to the base station device 200, that is, failure. Therefore, there is a high possibility that the retransmission of the data fails. Therefore, by holding the retransmission of the data in such a situation, it may be possible to reduce the power consumption.

### (2) Execution of retransmission

After the retransmission of the data is hold in (1), the CPU 104 executes the retransmission of the data when the speed sensor 103 detects the movement speed "equal to or less than" the predetermined speed. For example, it is assumed that the predetermined speed is set to a speed of 30 km/h. After the speed sensor 103 detects the speed of 60 km/h, when the speed decreases due to the brake operation and the speed sensor 103 detects a speed of 30 km/h, the communication portion 102 executes the retransmission of the data while maintaining a transmission interval and cycle that are specified by SIGFOX. Here, the description of "equal to or less than" of the present disclosure means not only a case where the reference numerical value is included but also a case where the reference numerical value is not included.

When the response to the retransmission of this data is not received from the base station device 200 within 45 seconds, further retransmission may be attempted. However, for preventing loads of a communication network from increasing, the retransmission may stop after a predetermined number of retransmissions are attempted.

In the present embodiment, an example in which the predetermined speed (for example, 40 km/h) that is a condition for holding the retransmission is different from the predetermined speed (for example, 30 km/h) that is a condition for executing the retransmission has been described. However, the speed may be changed within a range that the predetermined speed for holding the retransmission is equal to or higher than (≥) the predetermined speed that is the condition for executing the retransmission.

The movement speed decreases, and thereby it may be possible to estimate that the possibility that the up communication from the communication terminal device 100 to the base station device 200 can be executed becomes high. Therefore, there is a high possibility that the retransmission of the data succeeds. Therefore, by retransmitting the data in such a case, it may be possible to reliably transmit the data to the base station device.

### (3) Stop of retransmission

When the speed sensor 103 detects the movement speed equal to or higher than the predetermined speed during the execution of the retransmission of the data, the CPU 104 "stops" the retransmission of the data. For example, it is assumed that predetermined speed is set to a speed of 40 km/h. When the speed increases due to the accelerator operation during the execution of the retransmission of the data in (2) and the speed sensor 103 detects the speed exceeding 40 km/h, the CPU 104 "stops" the retransmission of the data. Here, the meaning of the description "stop" of the present disclosure may include holding retransmission of the entire data, suspending of the hold of the retransmission of an unsent part of the data, and stopping (in other words, no execution of) the retransmission of the data.

The movement speed increases during the retransmission of the data, and thereby it may be possible to estimate that the possibility that the up communication from the communication terminal device 100 to the base station device 200 is interrupted becomes high. Therefore, there is a high possibility that the retransmission of the data fails. Therefore, by stopping the retransmission of the data in such a situation, it may be possible to reduce the power consumption.

### (4) Others

In the example of (1) described above, the data retransmission is determined based on the movement speed detected when the communication portion 102 transmits the data. However, the detection time of the movement speed is not limited to the data transmission time. For example, it may be a time when it is confirmed that the response is not received, or may be a time when the retransmission is executed after it is confirmed that the response is not received. Note that (2) and (3) are arbitrary configurations in the present disclosure. Further, it is not necessary to execute all retransmission control of (1), (2), and (3), and control may be executed alone or in any combination. When the retransmission conflicts with a periodic communication or an irregular communication timing for each separately defined event, the periodic communication or the irregular communication may be prioritized. After these end, the retransmission may start or restart.

### 2. Operation of communication terminal device

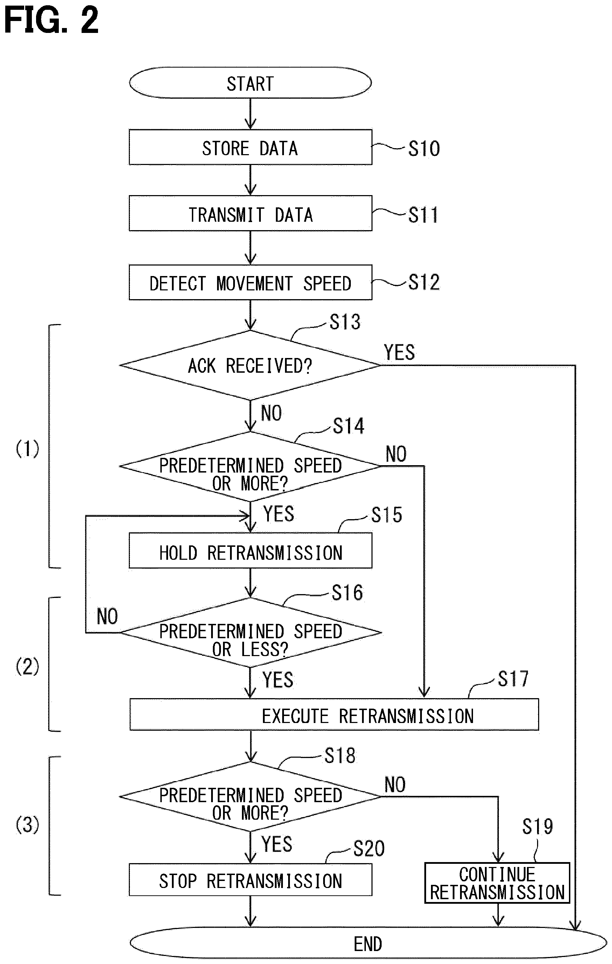

Next, the operation of the communication terminal device 100 of the first embodiment will be described with reference to FIG. 2. Here, an example of executing retransmission control of all of the (1), (2), and (3) will be described. The RAM 101 stores the data to be transmitted (S10). The communication portion 102 transmits the data stored in the RAM 101 to the base station device 200 (S11).

The speed sensor 103 detects the movement speed of the automobile on which the communication terminal device 100 is mounted (S12).

The communication portion 102 determines whether to receive the response (ACK) to the transmission of the data in S11 from the base station device 200 (S13). When the response is received, the data transmission is determined to be successful, and the process ends. When the response is not received, the process shifts to S14. The CPU 104 determines whether the speed sensor 103 detects the movement speed equal to or higher than the predetermined speed at the time of data transmission in S11 (S14). When the movement speed equal to or higher than the predetermined speed is not detected, the CPU 104 executes the retransmission of the data (S17). When the movement speed equal to or higher than the predetermined speed is detected, the CPU 104 holds the retransmission of the data (S15).

The CPU 104 determines whether the speed sensor 103 has detected the movement speed equal to or lower than the predetermined speed (S16). When the movement speed equal to or lower than the predetermined speed has not been detected, the CPU 104 continuously holds the retransmission (S15). When the movement speed equal to or higher than the predetermined speed has been detected, the CPU 104 executes the retransmission of the data (S17).

The CPU 104 determines whether the speed sensor 103 has detected the movement speed equal to or higher than the predetermined speed during the retransmission of the data (S18). When the movement speed equal to higher than the predetermined speed has not been detected, the CPU 104 continues the retransmission (S19). When the speed equal to or higher than the predetermined speed has been detected, the CPU 104 stops the retransmission of the data (S20).

In the flow of FIG. 2, when a process or determination in the latter stage does not presuppose a process or determination in the first stage, the order can be changed. In the above description of the operation, the determination in S14 is performed based on the movement speed when the data is transmitted from the communication portion 102. However, alternatively, a movement speed at the time of the determination in S14, that is, the determination of whether the retransmission of the data is executed or hold may be used. In S16, the determination is executed based on the movement speed immediately before the retransmission is executed, and, in S20, the determination is executed immediately before the retransmission is stopped. However, it may have a certain range as long as it does not deviate from the purpose of using the movement speed also in S14. That is, S12 represents execution of the detection of the movement speed itself. A case where the movement speed is periodically detected is also included. A position on the flow in consideration of the detection timing can be appropriately changed. For example, it is conceivable that the movement speed is detected at at least one of a position before S13, a position between S13 and S14, a position between S15 and S16, or a position between S17 and S18.

FIG. 2 shows the communication method of the communication terminal device and a process procedure of a program executed by the communication terminal device. The program is implemented as software in any protocol stack of communication protocols, and not necessarily at an application level. In a case of the application level, it may be possible to cover shortcomings of an upper layer while maintaining a communication protocol of the upper layer of a communication method.

### 3. Format of data transmitted by communication terminal device

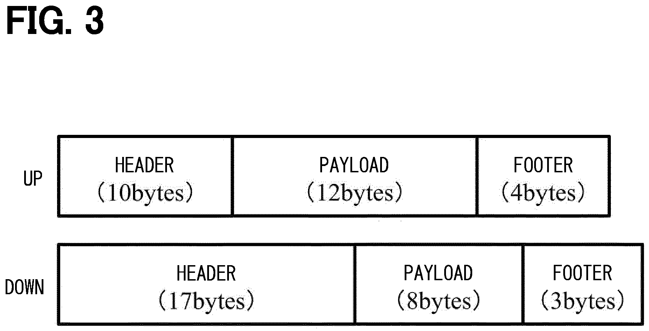

An example of a format of data transmitted from the communication terminal device 100 to the base station device 200 will be described with reference to FIG. 3. This example shows a frame configuration of data for an up communication and a down communication of the SIGFOX.

The data format (that is, up frame) transmitted from the communication portion 102 to the base station device 200 includes a header, a payload, and a footer. The header is formed of an area with 10 bytes, and stores data necessary for preamble or synchronization. The payload is formed of an area with 12 bytes, and stores data to be transmitted. The payload may include a data ID for identifying the data to be transmitted, and a sequence number indicating data transmission order or acquisition-detection order. The footer is formed of an area with 4 bytes and stores an authentication code, a checksum, and the like. A data format (that is, down from) transmitted from the base station device 200 to the communication portion 102 also includes a header, a payload, and a footer, similarly to the up frame.

The sequence number is assigned based on a timing when data is first transmitted or acquired and detected. In a case where the response (ACK) cannot be received and it is determined that the response is interrupted, that is, in a case of retransmission, the sequence number assigned at the above timing is inherited and transmitted as it is. Thereby, a constant-irregular event that occurs after the retransmission data is preferentially transmitted. Even when the event arrives at the base station device in no particular order, it may be possible to reproduce data in which the transmission order or the acquisition-detection order is reflected. The constant-irregular communication executed in synchronization with data detection is executed regardless of the speed at that time.

In the present embodiment, the payload stores the sequence numbers assigned in the transmission order from the communication portion 102. However, it is not limited to this. The sequence numbers may be assigned in the detection order. The sequence number may not be stored in the payload, and may be stored in any part of the frame.

In the low power wide area (LPWA) wireless communication method, an allowable transmission interval is long. Therefore, when the mechanism of the retransmission of data in the first embodiment is used, there is a possibility that data is not received by the base station device 200 in the detection order of various sensors connected to the communication terminal device 100. Therefore, by assigning the sequence number to the data transmitted from the communication terminal device 100, the base station device 200 that is the transmission destination can organize the data in the detection order of various sensors connected to the communication terminal device 100 or the order of the original transmission from the communication terminal device 100.

In the case where the mechanism of the retransmission of the data in the first embodiment is used, the up communication may be determined to be failure and the retransmission may be executed when the response from the base station device 200 has not been received. However, even though the base station device 200 succeeds in receiving the data and transmits the response to the communication terminal device 100, the communication terminal device 100 may not be able to receive the response. In this case, the base station device 200 receives the same data twice. Therefore, by assigning the sequence number to the data transmitted from the communication terminal device 100, when the base station device 200 that is the transmission destination has received the same data from the communication terminal device 100 multiple times, one of them is not discarded and the others can be discarded.

### (Second embodiment)

### 1. Configuration of base station device

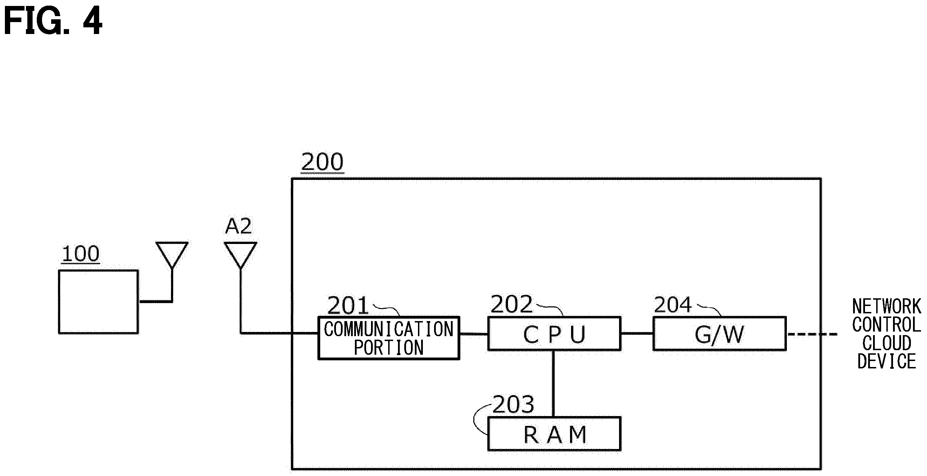

A configuration of the base station device 200 of a second embodiment will be described with reference to FIG. 4. The base station device 200 receives data using a data format of FIG. 3 from the communication terminal device 100 described in the first embodiment. The payload of the data stores the sequence numbers assigned in the order of transmission form the communication portion 102 of the communication terminal device 100.

The base station device 200 communicates with the communication terminal device 100 described in the first embodiment by the low power wide area (LPWA) wireless communication method. For example, the base station device 200 communicates by using the low power wide area wireless communication system, for example, the SIGFOX developed by the Sigfox company or the LoRa developed by the Semtech company. The base station device 200 includes a communication portion 201, a CPU 202, a RAM 203, a gateway (G/W) 204, and an antenna A2.

The communication portion 201 receives the data transmitted from the communication terminal device 100 via the antenna A2. The communication portion 201 transmits the response to the data reception to the communication terminal device 100 via the antenna A2.

The CPU 202 (corresponding to an "analysis portion") analyzes the data received by the communication portion 201. Specifically, when there is the data having a duplicate sequence number, any one of data is left and the remaining of data is discarded, the left data is saved in the RAM 203 described later. For example, when there are three data having a sequence of 0011, any one of data is left and the remaining of data is discarded, and the left one data is saved in the RAM 203. By rearranging the received data in accordance with the sequence numbers, the data is arranged in the order of the original transmission from the communication terminal device 100, and stored in the RAM 203.

The RAM 203 (corresponding to a "storage portion") stores the data received by the communication portion 201 via the CPU 202. Although it is assumed that the RAM 203 is a random access memory, the RAM 203 may be a hard disk (HDD), a flash memory, or the like.

The gateway (G/W) 204 is connected to a cloud device via a network, and the data stored in the RAM 203 is transferred to the cloud device.

In the low power wide area (LPWA) wireless communication method, an allowable transmission interval is long. Therefore, when the mechanism of the retransmission of data in the first embodiment is used, there is a possibility that data is not received by the base station device 200 in the detection order of various sensors connected to the communication terminal device 100. Therefore, by assigning the sequence number to the data transmitted from the communication terminal device 100, the base station device 200 that is the transmission destination can organize the data in the detection order of various sensors connected to the communication terminal device 100 or the order of the original transmission from the communication terminal device 100.

In the case where the mechanism of the retransmission of the data in the first embodiment is used, the up communication may be determined to be failure and the retransmission may be executed when the response from the base station device 200 has not been received. However, even though the base station device 200 succeeds in receiving the data and transmits the response to the communication terminal device 100, the communication terminal device 100 may not be able to receive the response. In this case, the base station device 200 receives the same data multiple times. Therefore, by assigning the sequence number to the data transmitted from the communication terminal device 100, when the base station device 200 that is the transmission destination has received the same data from the communication terminal device 100 multiple times, one of them is not discarded and the others can be discarded.

In the present embodiment, although the base station device 200 analyzes the received data, the cloud device connected via the gateway (G/W) 204 may analyze the received data. In this case, the cloud device indirectly receives the data from the communication terminal device via the base station device 200. That is, the "base station device" of the present disclosure includes a backbone device such as the cloud device connected to the base station device, in addition to a narrowly defined base station device that directly communicates with the communication terminal device.

### 2. Operation of base station device

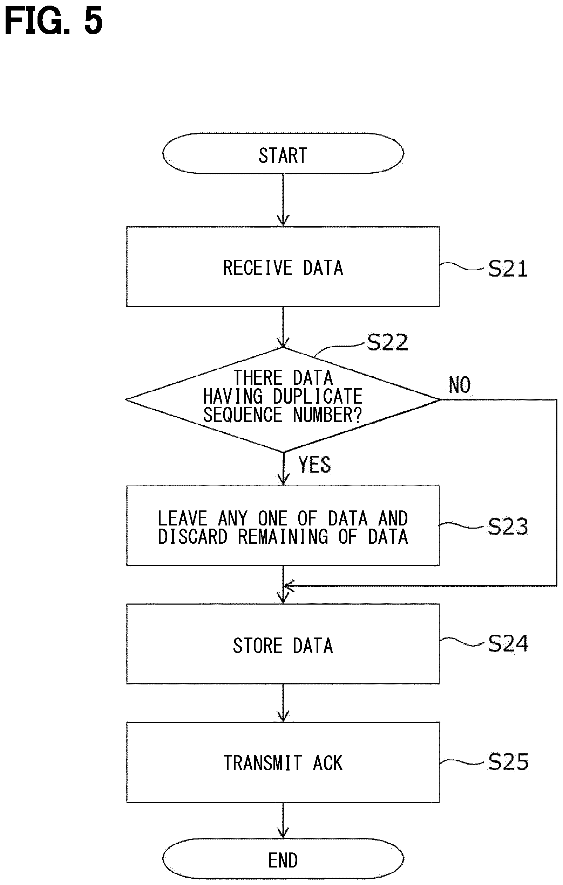

Next, the operation of the base station device 200 of the second embodiment will be described with reference to FIG. 5. The communication portion 201 receives the data transmitted from the communication terminal device 100 (S21). The CPU 202 determines whether there is data having the duplicate sequence number for each data received in S21 (S22). When there is no data having the duplicate sequence number, the data is stored in the RAM 203 (S24). When there is the data having the duplicate sequence number, any one of data is left and the remaining is discarded (S23), and the left data is saved in the RAM 203 (S24). The communication portion 201 transmits the response (ACK) to the data reception to the communication terminal device 100 (S25).

In the flow of FIG. 5, when a process or determination in the latter stage does not presuppose a process or determination in the first stage, the order can be changed. Further, S23 and S24 are interchanged, and any one of data can be saved and the remaining of data can be discarded.

FIG. 5 shows the communication method of the base station device and a process procedure of a program executed by the base station device. The program is implemented as software in any protocol stack of communication protocols, and not necessarily at an application level. In a case of the application level, it may be possible to cover shortcomings of an upper layer while maintaining a communication protocol of the upper layer of a communication method. In the case of a mechanism, in the first embodiment, that stops the retransmission after attempting the retransmission a predetermined number of times, the subsequent response may not be transmitted (S25).

### (Conclusion)

The features of the communication terminal device and the base station device according to the embodiments of the present disclosure have been described above.

Terms used in the description of each embodiment are examples and may be replaced with synonymous terms or terms having a synonymous function.

The block diagram used in the description of each embodiment is a diagram in which the configurations of the communication terminal device and the base station device are classified and organized by function. These functional blocks may be provided by any combination of hardware or software. Further, since the functions are shown, the block diagram can be understood as disclosure of the method and the program that implements the method.

Order of functional blocks that can be grasped as processing, a sequence, and a method described in relation to each embodiment may be changed unless some restriction is imposed, for example, a result from one step is utilized at another step.

The terms of "first" and "second" used in the description of each embodiment and claims are for discriminating two or more configurations and methods of the same kind and do not limit order or superiority or inferiority.

In the embodiments described above, it is described that the communication terminal device of the present disclosure is mounted on the vehicle, that is, the in-vehicle device is described. However, the present disclosure may be applied on the premise that the terminal device of the present disclosure is possessed by the pedestrian.

Examples of the communication terminal device include, as parts or semi-finished products, a semiconductor, an electronic circuit, a module, or an ECU (electronic control unit). Further, the examples include, as finished products, a drive recorder, a smartphone, a personal computer, a mobile phone, and a mobile information terminal.

The present disclosure is implemented not only by dedicated hardware having a configuration and a function described in relation to each embodiment. The present disclosure can also be implemented as a combination of a program for implementing the present invention, recorded on such a recording medium as memory and a hard disk and general-purpose hardware including dedicated or general-purpose CPU, memory, or the like, capable of executing the program.

A program may be stored in a non-transitory tangible storage medium including an external storage (for example, hard disk, USB memory, CD/BD), or an internal storage (for example, RAM, ROM) in a special-purpose or general-purpose hardware (for example, computer). Such a program may be downloaded to the storage medium in the hardware via a communication link from a server. As a result, it is possible to provide a latest function by updating the program.

### [Industrial Applicability]

The communication terminal device and the base station device according to the present disclosure are used not only for in-vehicle use but also for the low power wide area (LPWA) wireless communication terminal device in general. For example, the communication terminal device of the present disclosure is mounted on a delivered package, thereby the information indicating a delivery situation (for example, position information) of the package or an environment (for example, temperature or humidity) at the time of delivery is transmitted, and the information can be used.

## Claims

1. A communication terminal device (100) that is mounted on a mobile body and communicates with a base station device by a low power wide area (LPWA) wireless communication method, the communication terminal device comprising:
a storage portion (101) configured to store data to be transmitted;
a communication portion (102) configured to
transmit the data to the base station device and
receive a response to transmission of the data from the base station device;
a speed sensor (103) configured to detect a movement speed of the mobile body; and
a retransmission controller (104) configured to control retransmission of the data to the base station device,
wherein:
the retransmission controller holds the retransmission of the data based on the movement speed when the communication portion does not receive the response.

2. The communication terminal device according to claim 1, wherein:
the speed sensor detects the movement speed when the retransmission controller determines whether to execute or hold the retransmission of the data.

3. The communication terminal device according to claim 1, wherein:
the speed sensor is configured to detect the movement speed when the communication portion transmits the data.

4. The communication terminal device according to claim 1, wherein:
the retransmission controller holds the retransmission of the data when the speed sensor detects the movement speed equal to or higher than a predetermined speed.

5. The communication terminal device according to claim 1, wherein:
the retransmission controller executes the retransmission of the data when the speed sensor detects the movement speed equal to or less than a predetermined speed.

6. The communication terminal device according to claim 5, wherein:
the retransmission controller stops the retransmission of the data when the speed sensor detects the movement speed equal to or higher than the predetermined speed during the transmission of the data.

7. The communication terminal device according to claim 1, wherein:
the speed sensor uses a global positioning system (GPS) or an untethered dead reckoning.

8. The communication terminal device according to claim 1, wherein:
the data includes a sequence number assigned in an order of transmission from the communication portion or an order of acquisition by the communication terminal device.

9. A base station device (200) that receives data from a communication terminal device that is mounted on a mobile body and communicates by a low power wide area wireless communication method, wherein:
the communication terminal device includes
a storage portion (101) configured to store data to be transmitted,
a communication portion (102) configured to
transmit the data to the base station device and
receive a response to transmission of the data from the base station device, a speed sensor (103) configured to detect a movement speed of the mobile body, and
a retransmission controller (104) configured to control retransmission of the data to the base station device and hold the retransmission of the data based on the movement speed when the communication portion does not receive the response;
the data includes a sequence number assigned in an order of transmission from the communication portion or an order of acquisition from the communication terminal device;
the base station device includes
a communication portion (201) configured to receive the data and transmit the response to reception of the data to the communication terminal device,
an analysis portion (202) configured to analyze the data, and
a storage portion (203) configured to store the data; and
when there is a plurality of data having a duplicate sequence number, the analysis portion leaves any one of data, discards a remaining of data, stores left data in the storage portion.

10. A communication method of a communication terminal device (100) that is mounted on a mobile body and communicates with a base station device by a low power wide area (LPWA) wireless communication method, the communication method comprising:
storing data to be transmitted (310);
transmitting the data to the base station device (311);
detecting a movement speed of the mobile body (312); and
holding retransmission of the data based on the movement speed when a response to transmission of the data is not received from the base station device (313, 314, 315).

11. A communication control program executed by a communication terminal device (100) that is mounted on a mobile body and communicates with a base station device by a low power wide area (LPWA) wireless communication method, the communication control program configured to:
store data to be transmitted (310);
transmit the data to the base station device (311),
detect a movement speed of the mobile body (312), and
hold retransmission of the data based on the movement speed when a response to transmission of the data is not received from the base station device (313, 314, 315).
